# EUROPÄISCHE PATENTSCHRIFT

(11) **EP 1 884 156 B1**
(45) Veröffentlichungstag und Bekanntmachung des Hinweises auf die Patenterteilung: **15.05.2019**
(21) Anmeldenummer: 07109680.4
(22) Anmeldetag: 06.06.2007
(51) Int. Cl.: A01G 3/06

(54) **Handgeführte Elektrowerkzeugmaschine sowie Kupplung einer handgeführten Elektrowerkzeugmaschine**
Hand-operated electrical machine tool and coupler for a hand-operated electrical machine tool
Machine-outil électronique commandée à la main tout comme couplage d'une machine-outil électronique commandée à la main

(30) Priorität: 03.08.2006 DE 102006036634
(43) Veröffentlichungstag der Anmeldung: 06.02.2008
(73) Patentinhaber: ROBERT BOSCH GMBH, 70442 Stuttgart (DE)
(72) Erfinder: Mueller-Boysen, Ulrich, 73732 Esslingen (DE); Bantle, Florian, 73061 Ebersbach/Fils (DE)

(56) Entgegenhaltungen:
- DE-A1- 2 438 360
- DE-C1- 3 916 145
- DE-U- 6 915 406
- US-A- 4 127 938

## Beschreibung

### Stand der Technik

Die Erfindung betrifft eine handgeführte Elektrowerkzeugmaschine sowie eine Kupplung einer handgeführten Elektrowerkzeugmaschine nach den Oberbegriffen der unabhängigen Ansprüche.

Das Arbeiten bei handgeführten Elektrowerkzeugmaschinen kann teilweise dadurch erleichtert werden, dass ein Werkzeughalter verschwenkbar ausgebildet ist. Das Verschwenken des Werkzeugs erweist sich beispielsweise beim Schneiden von schwer zugänglichen Ästen oder zum Heckenstutzen als nützlich. Bei einer Grasschere kann ein um eine Gerätemittelachse verschwenkter Mähkopf zum Kantenschneiden eines Rasens vorteilhaft sein.

Nach dem Stand der Technik ist es bekannt, einen für die geschilderte Schwenkbewegung erforderlichen manuellen Drehmechanismus über ein Kronengelenk zu arretieren, das an einem freien Ende eines mit dem Gerät verbindbaren Fahrstocks angeordnet sein kann. Als Fahrstock wird grundsätzlich ein zusätzlicher Griff verstanden, der beispielsweise in Verbindung mit Grasscheren verwendet wird. Mit aufgesteckter Grasschere ist es für den Benutzer möglich, in aufrechter Haltung in unebenem Gelände Gras zu schneiden. Ein Winkel des Drehmechanismus kann bei einem derartigen Fahrstock so verstellt werden, dass der Fahrstock aus dem Gerät herausgezogen, gedreht und wieder eingeschoben wird. Es ist auch ferner bekannt, die Arretierung über einen Rastknopf zu sichern, um ein ungewolltes Lösen des Fahrstocks zu verhindern. Der Verschwenkmechanismus des Werkzeughalters bei einer derartigen Vorrichtung ist relativ umständlich zu bedienen.

Ein derartiger Fahrstock kann mit oder ohne Rollen benutzt werden. Werden Räder in Verbindung mit einem Fahrstock verwendet, können diese zusammen mit dem Fahrstock an ein Gerät angeclipt werden. Nachteilig ist, dass dabei keine Möglichkeit besteht, einen Werkzeughalter zu verdrehen.

Bei einer anderen handgeführten Elektrowerkzeugmaschine ist es bekannt, Räder aufzuclipen und einen Fahrstock mit dem Gerät zu verbinden. Ein Werkzeug des Geräts, beispielsweise ein Schneidkopf, kann durch Lösen eines Arretierschiebers gelöst und um einen Winkel von +/- 90° gedreht werden. Die zusätzliche Bedienung eines derartigen Schiebers ist relativ umständlich.

Eine andere handgeführte Elektrowerkzeugmaschine, die ein Verschwenken des Werkzeughalters ermöglicht, ist in der deutschen Patentschrift DE 39 16 145 C1 beschrieben.

### Offenbarung der Erfindung

Eine erfindungsgemäße handgeführte Elektrowerkzeugmaschine geht aus von einem Stockhalter, einen mit dem Stockhalter verbindbaren Fahrstock sowie einem Werkzeughalter. Es wird vorgeschlagen, dass zwischen dem Werkzeughalter und dem Stockhalter eine Kupplung angeordnet ist, wobei die Kupplung eine Schwenkführung aufweist, die eine relative Verdrehung zwischen dem Werkzeughalter und dem Stockhalter Dabei weist einer der beiden Halter stirnseitig zwei axial abstehende, in die Kupplung eingreifende Zapfen auf, wobei einer der Zapfen in einer als besagte Schwenkführung ausgeführte Führungsnut führbar und der andere mit der Kupplung verbundene Halter um den anderen Zapfen als Drehachse schwenkbar ist.

Vorteilhafterweise wird mit der vorgeschlagenen Lösung ein einfach zu bedienender Schwenkmechanismus erzielt, der ohne Betätigung eines Knopfes, eines Schalters oder dgl. ausgelöst werden kann. Günstigerweise ist der Werkzeughalter so mit der Kupplung verbunden, dass er zusammen mit der Kupplung eine schwenkbare Einheit ausbilden kann. Das in dem Werkzeughalter angeordnete Werkzeug, beispielsweise eine Schere oder ein anderes Schneidgerät, wird günstigerweise zusammen mit der schwenkbaren Einheit verschwenkt.

In einer bevorzugten Ausführungsform ist die Kupplung wenigstens aus einem plattenförmigen Basiselement gebildet. Als Schwenkführung der Kupplung kann wenigstens eine Führungsnut vorgesehen sein, die mit einem korrespondierenden Zapfen des Stockhalters in Eingriff steht. Günstigerweise weist der Stockhalter stirnseitig zwei axial abstehende, in die Kupplung eingreifende Zapfen auf, wobei einer der Zapfen in der Führungsnut führbar und der mit der Kupplung verbundene Werkzeughalter um den anderen Zapfen als Drehachse schwenkbar ist. Um eine vorteilhafte Schwenkung der schwenkbaren Einheit in zwei Richtungen zu ermöglichen, sind besonders bevorzugt zwei längliche und sich X-förmig kreuzende Führungsnuten ausgebildet, etwa in der Art von zwei sich kreuzenden Sicheln. Die Drehachse der Schwenkbewegung ist dabei jeweils in Bezug auf eine Gerätemittelachse exzentrisch angeordnet. Besonders bevorzugt sind die Führungsnuten jeweils diagonal auf dem Basiselement ausgebildet. Die Führungsnuten weisen bevorzugt einen Krümmungsradius auf, der etwa einem Schwenkradius der Kupplung um jeweils einen der Zapfen als Drehpunkt entspricht.

In einer Ausgangsposition sind die Zapfen des Stockhalters in den oberen, auseinanderklaffenden Enden der X-förmigen Führungsnuten des Basiselements eingeführt. Während der Verschwenkung können der Werkzeughalter und der Stockhalter über die Kupplung in einem Winkel von wenigstens 45° gegeneinander um eine Gerätemittelachse seitlich verdreht oder verschwenkt werden, indem die Kupplung mit einer der Führungsnuten des Basiselements entlang eines der Zapfen geführt wird, und der andere Zapfen eine Drehachse bildet. Die Schwenkbewegung kann über eine Krafteinwirkung von außen eingeleitet werden.

Besonders bevorzugt kann die Verschwenkung sowohl seitlich in eine Richtung als auch in Gegenrichtung erfolgen, wobei eine Endposition vorteilhafterweise jeweils um +/- 90° gegenüber der Anfangsposition verdrehbar ist. Dabei ist von besonderem Vorteil, dass das in den verschwenkten Werkzeughalter angeordnete Werkzeug in einem rechten Winkel zur Ausgangs-Arbeitsposition betätigt werden kann, was sich beispielsweise beim Kantenschneiden eines Rasens und dgl. als vorteilhaft erweist. Je nach Bedarf kann die schwenkbare Einheit auch in eine beliebige Zwischenposition geschwenkt werden.

In einer besonders bevorzugten Weiterbildung umfasst die Kupplung ein plattenförmiges Arretierelement mit einer zweiten Schwenkführung, die wenigstens bereichsweise deckungsungleich mit der Schwenkführung des Basiselements ist. Bevorzugt kann die Schenkführung wiederum als Führungsnut, besonders bevorzugt als zwei sich X-förmige kreuzende Führungsnuten ausgebildet sein, die zumindest bereichsweise deckungsungleich mit den Führungsnuten des Basiselements sind. Insbesondere können die Enden der Führungsnuten so ausgebildet sein, dass Arretiermittel zum Arretieren in einer Endposition ausgebildet sind, wobei die Zapfen beim Erreichen einer der Endpositionen in den Führungsnuten einrasten. Beim Zurückschwenken in die Ausgangsposition ist günstigerweise ein Anfangswiderstand zu überwinden, wodurch ein besonders bevorzugtes Arretiermittel ausgebildet wird. Nach Überwinden des Anfangswiderstands kann die schwenkbare Einheit anhand der durch Zapfen und Führungsnuten gebildeten Führung wieder definiert geschwenkt werden bis zum Erzielen einer anderen gewünschten Position, beispielsweise in der Anfangsposition. Zum Ausgleich von Relativbewegungen zwischen dem Basiselement und dem Arretierelement bzw. der Kupplung und dem Werkzeughalter kann ein Federelement angeordnet sein.

In einer besonders bevorzugten Variante weist der Stockhalter Verbindungsvorrichtungen zur lösbaren Verbindung von Rädern auf. Die Räder können beispielsweise einfach an den Stockhalter angeclipt werden, womit der Bedienungskomfort erheblich erhöht wird. Von besonderem Vorteil ist dabei, dass die Elektrowerkzeugmaschine sowohl auf Rädern geführt werden können und gleichzeitig der Werkzeughalter verschwenkbar ist, wobei die Räder horizontal bleiben. Die Gerätemittelachse befindet sich dabei im Arbeitszustand parallel zur Arbeitsoberfläche.

Befindet sich die verschwenkte Einheit in einer der Endposition, d.h. um +/- 90° verschwenkt, ist das Werkzeug so in dem Werkzeughalter angeordnet, dass die Räder zumindest teilweise auf der Arbeitsoberfläche, beispielsweise dem Rasen, laufen können. Besonders bevorzugt ist ein Durchmesser der Räder so ausgebildet, dass sich die Räder zwar nahe am verschwenkten Werkzeug befinden, wobei jedoch vorteilhafterweise ein ungehindertes Laufen der Räder ermöglicht wird. Günstigerweise kontaktiert der Fahrstock die Räder weder in der Ausgangsposition noch in der verschwenkten Endposition.

Insgesamt wird mit der vorgeschlagenen Lösung eine mit einer schwenkbaren Einheit ausgestattete Elektrowerkzeugmaschine zur Verfügung gestellt, die sich dadurch auszeichnet, dass sie besonders bedienungsfreundlich ist.

### Kurze Beschreibung der Zeichnungen

Weitere Ausbildungsformen und Aspekte der Erfindung werden unabhängig von einer Zusammenfassung in den Patentansprüchen ohne Beschränkung der Allgemeinheit im Folgenden anhand einer Zeichnung näher erläutert.

Dabei zeigen:
- Fig. 1: eine Ansicht einer bevorzugten Ausführungsform einer erfindungsgemäßen handgeführten Elektrowerkzeugmaschine in einer Explosionsdarstellung;
- Fig. 2: eine perspektivische Darstellung der Elektrowerkzeugmaschine im montierten Zustand mit einem Fahrstock in einer Ausgangsposition;
- Fig. 3a,b,c: eine Frontansicht einer bevorzugte Ausführungsform einer Kupplung in einer neutralen Ausgangsposition (Fig. 3a), in einer gegenüber einem Fahrstockhalter um 90° verschwenkten Endposition in einer Richtung (Fig. 3b) und in einer anderen Richtung (Fig. 3c);und
- Fig. 4a,b: eine Darstellung einer bevorzugten Ausführungsform einer erfindungsgemäßen handgeführten Grasschere von oben in einer Ausgangsposition (Fig. 4a) und in einer verschwenkten Endposition (Fig. 4b).

### Ausführungsformen der Erfindung

Gleiche Elemente werden in den Figuren gleich bezeichnet.

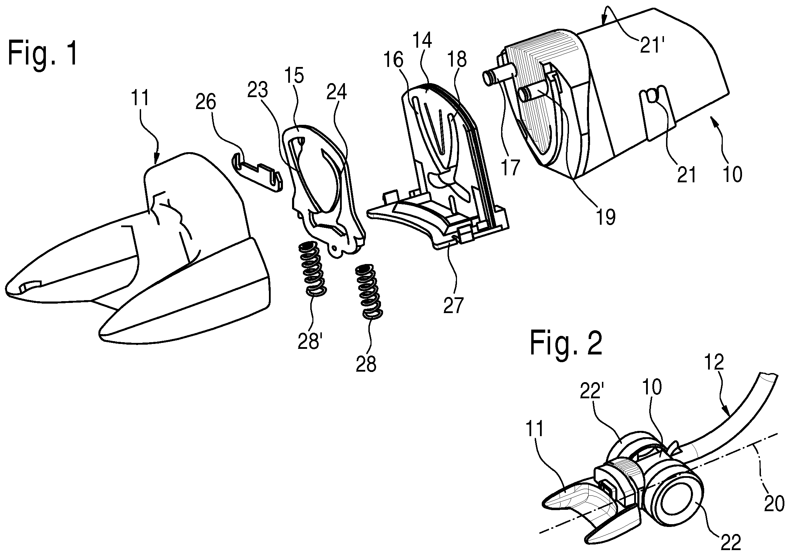

In Fig. 1 ist in einer Explosionsdarstellung eine Ausführungsform einer erfindungsgemäßen, als Grasschere ausgebildeten handgeführten Elektrowerkzeugmaschine gezeigt mit einem Stockhalter 10 und einem gabelförmigen Werkzeughalter 11. Mit dem Stockhalter 10 kann ein in Fig. 1 nicht gezeigter Fahrstock 12 verbunden werden. In dem Werkzeughalter 11 kann ein nicht dargestelltes Werkzeug, beispielsweise ein Schneidwerkzeug, eingespannt bzw. verrastet werden.

Zwischen dem Werkzeughalter 11 und dem Stockhalter 10 ist eine Kupplung angeordnet. Die Kupplung weist erfindungsgemäß eine Schwenkführung auf, die eine relative Verdrehung zwischen dem Werkzeughalter 11 und dem Stockhalter 10 ermöglicht. Die Kupplung ist mittels eines Befestigungselements 26 so mit dem Werkzeughalter 11 verbunden, dass eine gegenüber dem Stockhalter 10 verschwenkbare Einheit ausgebildet wird.

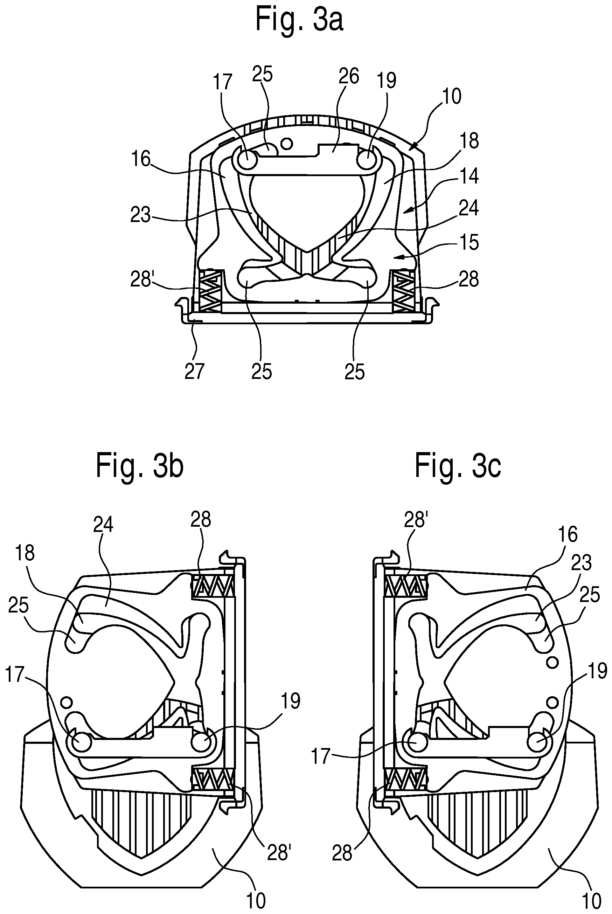

Die Kupplung umfasst ein im Wesentlichen plattenförmiges Basiselement 14 und ein Arretierelement 15. Beide Elemente 14, 15 weisen jeweils eine Schwenkführung auf. Bei dem plattenförmigen Basiselement 14 sind als Schwenkführung zwei sich X-förmig kreuzende Führungsnuten 16, 18 ausgebildet, die mit zwei korrespondierenden Zapfen 17, 19 des Stockhalters 10 in Eingriff stehen. Die Zapfen 17, 19 stehen stirnseitig vom Stockhalter 10 axial ab und greifen in die Kupplung ein. Der Schwenkmechanismus wird im Detail zur Figurenbeschreibung zu Fig. 3 erläutert.

Das Arretiermittel 15 ist im montierten Zustand auf der werkzeughalterseitigen Seite des Basiselements14 angeordnet und zusammen mit dem Basiselement 14 über das Befestigungsmittel 26 mit dem Werkzeughalter 11 verbunden. Das Arretierelement 15 weist eine zweite aus zwei Führungsnuten 23, 24 gebildete Schwenkführung auf, die wenigstens bereichsweise deckungsungleich mit der Schwenkführung des Basiselements 14 ist.

Das Befestigungselement weist zwei mit den Zapfen 17, 19 korrespondierende Ausnehmungen auf. Im verbundenen Zustand schließen der Stockhalter 10, die Teilelemente 14, 15 der Kupplung sowie der Werkzeughalter 11 am Umfang miteinander bündig ab. Das Basiselement 14 weist am unteren Rand einen flächigen Vorsprung 27 auf, der im montierten Zustand als Abdeckung dient. In zwei vertikal zur Arbeitsoberfläche, seitlich verlaufenden Ausnehmungen des Basiselements 14 sind im montierten Zustand zwei Federelemente 28, 28' angeordnet.

Der Stockhalter 10 weist seitlich zwei Verbindungsvorrichtungen 21, 21' auf zur lösbaren Verbindung von Rädern 22, 22', die in Fig. 2 dargestellt ist. Fig. 2 zeigt die Elektrowerkzeugmaschine im montierten Zustand, wobei am freien Ende des Stockhalters 10 ein Fahrstock 12 angeordnet ist. Der Fahrstock 12 kann auch als Teleskopstock ausgebildet sein, um eine flexible Längenverstellung zu ermöglichen. Die Darstellung in Fig. 2 zeigt die Elektrowerkzeugmaschine in einer nicht verschwenkten Ausgangsposition des Werkzeughalters 11, wobei eine Gerätemittelachse 20 im Arbeitszustand parallel zur Arbeitsoberfläche angeordnet ist.

In Fig. 3 ist eine Frontansicht einer bevorzugten Ausführungsform einer Kupplung eines Elektrowerkzeugs dargestellt, wobei in Fig. 3a eine neutrale Ausgangsposition gezeigt ist, und in Fig. 3b und 3c jeweils in einer gegenüber einem Fahrstockhalter um 90° verschwenkten Endposition in einer Richtung und in Gegenrichtung.

In Fig. 3a sind das Befestigungselement 26, das Arretierelement 15, das Basiselement 14 und der Stockhalter 10 in Bildebene hintereinander angeordnet und mit Hilfe der Zapfen 17, 19 verbunden. Es ist erkennbar, dass die als Führungsnuten 23, 24 ausgebildete Schwenkführung des Arretierelements 15 wenigstens bereichsweise deckungsungleich mit der als Führungsnuten 16, 18 gebildeten Schwenkführung des Basiselements 14 ist. Die Führungsnuten 16 und 18 bzw. 23 und 24 kreuzen sich jeweils X-förmig, wobei der Kreuzungspunkt gegenüber der Gerätemittelachse 20 nach unten in Richtung zum Vorsprung 27 versetzt ist. Die Führungsnuten 16 und 18 bzw. 23 und 24 sind jeweils nach außen gekrümmt, wobei deren Krümmungsradius etwa einem Schwenkradius der schwenkbaren Einheit um einen der Zapfen 17, 19 entspricht. In Draufsicht sind die Führungsnuten 16 und 18 bzw. 23 und 24 jeweils wie zwei sich kreuzende Säbel ausgebildet.

In der Ausgangsposition greifen die Zapfen 17, 19 in die oberen, jeweils auseinanderklaffenden Enden der X-förmigen Führungsnuten 16, 18, 23, 24 ein. Die wenigstens aus dem Basiselement 14, dem Arretierelement 15 und dem nicht dargestellten Werkzeughalter 11 gebildete schwenkbare Einheit ist relativ zum Stockhalter 10 seitlich verschwenkbar.

Die Schwenkbewegung nach rechts (sh. Fig. 3b) wird so ausgeführt, dass der Zapfen 17 eine Drehachse bildet und die schwenkbare Einheit so entlang den Führungsnuten 18, 24 geführt wird, dass die Führungsnuten 18, 24 entlang dem Zapfen 19 laufen. Die Drehachse der Schwenkbewegung ist dabei in Bezug auf die Gerätemittelachse 20 exzentrisch angeordnet. Mit Hilfe einer als an den äußeren Enden der Führungsnuten 23, 24 des Arretierelements 15 ausgebildeten Ausbuchtungen werden Rastmittel 25 ausgebildet. Sobald die schwenkbare Einheit beim Schwenken eine Endposition erreicht hat, die um 90° gegenüber dem Stockhalter 10 verschwenkt ist, rastet die schwenkbar Einheit ein. Beim Zurückschwenken muss ein Anfangswiderstand überwunden werden, um die Position der schwenkbaren Einheit aus der Endposition in Richtung zur Ausgangsposition zurückzuschwenken.

Die Drehung in Gegenrichtung (Fig. 3c) verläuft analog dazu, wobei die Schwenkbewegung entlang dem Zapfen 17 in den Führungsnuten 16, 23 führbar und die um den anderen Zapfen 19 als Drehachse schwenkbar ist. Mit Hilfe der Federelemente 28, 28' werden jeweils Relativbewegungen zwischen dem Basiselement 14 und dem Arretierelement 15 ausgeglichen. Bei der Montage können das Basiselement 14 und das Arretierelement 15 anhand der Federelemente 28, 28' zueinander in Vorspannung gesetzt werden.

Die Drehzapfen 17, 19 bleiben bei den Schwenkbewegungen jeweils in Bezug auf den Halter von dem sie abstehen am Ort.

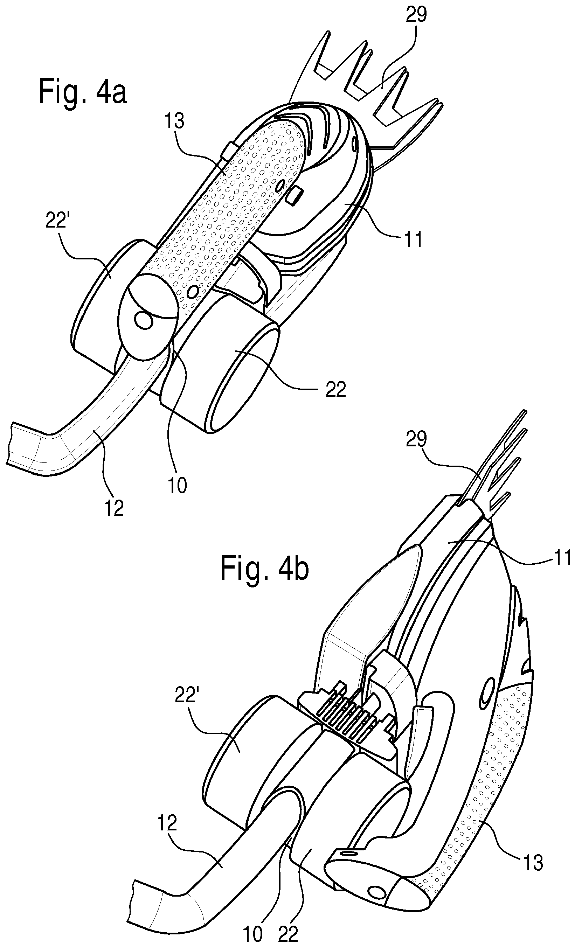

In Fig. 4 wird eine perspektivische Darstellung einer alternativen, besonders bevorzugten Ausführungsform der handgeführten Elektrowerkzeugmaschine in Form einer Grasschere gezeigt. Die Grasschere umfasst einen Stockhalter 10, mit dem ein Fahrstock 12 verbunden ist, und der seitlich nicht erkennbare Verbindungsvorrichtungen aufweist, über welche jeweils Räder 22, 22' angeclipt sind. In einem Gerätekörper 13 sind eine nicht erkennbare Antriebseinheit und Getriebeeinheit angeordnet. Der Gerätekörper 13 ist an seiner Gehäuseoberfläche griffbügelartig ausgebildet und erleichtert das manuelle Auslösen der Schwenkbewegung. In Fig. 4a ist die Grasschere in einer Ausgangsposition, in Fig. 4b in einer verschwenkten Endposition der schwenkbaren Einheit nach rechts dargestellt, wobei die Schwenkbewegung wie oben beschrieben ausführbar ist. Ein Durchmesser und eine Breite der Räder 22, 22' sind so dimensioniert, dass in der verschwenkten Endposition der schwenkbaren Einheit ein ungehindertes Laufen der Räder 22, 22' auf der Arbeitsoberfläche möglich ist. Ein Schneidwerkzeug 29 der Grasschere ist im geschwenkten Zustand vertikal zur Arbeitsoberfläche angeordnet und ermöglicht das Kantenschneiden eines Rasens. Dabei ist das Schneidwerkzeug 29 innerhalb einer Räderachse angeordnet, so dass die Räder 22, 22' zumindest teilweise laufen können, während das Schneidwerkzeug 29 Ecken/Kanten des Rasens schneiden. Die Räder 22, 23' sind dabei nahe zum Schneidwerkzeug 29 angeordnet. Der Fahrstock 12 ist so mit dem Stockhalter 10 verbunden, dass er weder in der Ausgangsposition noch in der verschwenkten Endposition mit den Rädern 22, 22' in Kontakt tritt.

## Patentansprüche

1. Handgeführte Elektrowerkzeugmaschine, insbesondere Grasschere, umfassend wenigstens einen Stockhalter (10) und einen Werkzeughalter (11), wobei ein Fahrstock (12) mit dem Stockhalter (10) verbindbar ist, wobei zwischen dem Werkzeughalter (11) und dem Stockhalter (10) eine Kupplung angeordnet ist, wobei die Kupplung eine Schwenkführung aufweist, die eine relative Verdrehung zwischen dem Werkzeughalter (11) und dem Stockhalter (10) ermöglicht, **dadurch gekennzeichnet, dass** einer der zwei Halter (10,11) stirnseitig zwei axial abstehende, in die Kupplung eingreifende Zapfen (17,19) aufweist, wobei einer der Zapfen (17,19) in einer als besagte Schwenkführung ausgeführte Führungsnut (16) führbar und der andere mit der Kupplung verbundene Halter (10, 11) um den anderen Zapfen (17, 19) als Drehachse schwenkbar ist.

2. Handgeführte Elektrowerkzeugmaschine nach Anspruch 1, **dadurch gekennzeichnet, dass** die Kupplung wenigstens aus einem plattenförmigen Basiselement (14) gebildet ist.

3. Handgeführte Elektrowerkzeugmaschine nach Anspruch 1 oder 2, **dadurch gekennzeichnet, dass** als Schwenkführung die wenigstens eine Führungsnut (16) ausgebildet ist, die mit einem korrespondierenden Zapfen (17) des Halters (10,11) in Eingriff steht.

4. Handgeführte Elektrowerkzeugmaschine nach einem der vorhergehenden Ansprüche, **dadurch gekennzeichnet, dass** die Zapfen (17,19) bei von der Kupplung ausgeführten Schwenkbewegungen jeweils in Bezug auf den Halter von dem sie abstehen am Ort bleiben.

5. Handgeführte Elektrowerkzeugmaschine nach einem der vorhergehenden Ansprüche, **dadurch gekennzeichnet, dass** zwei längliche und sich X-förmig kreuzend Führungsnuten (16, 18) ausgebildet sind.

6. Handgeführte Elektrowerkzeugmaschine nach einem der vorhergehenden Ansprüche, **dadurch gekennzeichnet, dass** die Drehachse der Schwenkbewegung in Bezug auf eine Gerätemittelachse (20) exzentrisch angeordnet ist.

7. Handgeführte Elektrowerkzeugmaschine nach einem der vorhergehenden Ansprüche, **dadurch gekennzeichnet, dass** der Werkzeughalter (11) und der Stockhalter (10) über die Kupplung in einem Winkel von wenigstens 45° gegeneinander um die Gerätemittelachse (20) seitlich verschwenkbar sind.

8. Handgeführte Elektrowerkzeugmaschine nach Anspruch 2, **dadurch gekennzeichnet, dass** die Kupplung ein plattenförmiges Arretierelement (15) mit einer zweiten Schwenkführung (23, 24) umfasst, die wenigstens bereichsweise deckungsungleich mit der Schwenkführung des Basiselements (14) ist.

9. Handgeführte Elektrowerkzeugmaschine nach einem der vorhergehenden Ansprüche, **dadurch gekennzeichnet, dass** der Stockhalter (10) Verbindungsvorrichtungen (21, 21') zur lösbaren Verbindung von Rädern (22, 22') aufweist.

10. Handgeführte Elektrowerkzeugmaschine nach einem der vorhergehenden Ansprüche, **dadurch gekennzeichnet, dass** der Stockhalter (10) stirnseitig zwei axial abstehende, in die Kupplung eingreifende Zapfen (17,19) aufweist.

## Claims

1. Portable electric power tool, in particular grass shears, comprising at least one handle holder (10) and a tool holder (11), wherein a handle (12) is connectable to the handle holder (10), wherein a coupling is arranged between the tool holder (11) and the handle holder (10), wherein the coupling has a pivot guide that allows a relative rotation between the tool holder (11) and the handle holder (10), **characterized in that** one of the two holders (10, 11) has, at its end, two axially projecting pegs (17, 19) that engage in the coupling, wherein one of the pegs (17, 19) is guidable in a guide slot (16) embodied as said pivot guide and the other holder (10, 11), connected to the coupling, is pivotable about the other peg (17, 19) as axis of rotation.

2. Portable electric power tool according to Claim 1, **characterized in that** the coupling is formed at least from a plate-form base element (14).

3. Portable electric power tool according to Claim 1 or 2, **characterized in that** the at least one guide slot (16) is configured as pivot guide, said guide slot (16) being engaged with a corresponding peg (17) of the holder (10, 11).

4. Portable electric power tool according to one of the preceding claims, **characterized in that**, during pivoting movements carried out by the coupling, the pegs (17, 19) remain in situ in each case with respect to the holder from which they project.

5. Portable electric power tool according to one of the preceding claims, **characterized in that** two elongate guide slots (16, 18) that cross in an X-shaped manner are formed.

6. Portable electric power tool according to one of the preceding claims, **characterized in that** the axis of rotation of the pivoting movement is arranged eccentrically with respect to an appliance central axis (20).

7. Portable electric power tool according to one of the preceding claims, **characterized in that** the tool holder (11) and the handle holder (10) are pivotable laterally about the appliance central axis (20) at an angle of at least 45° to one another via the coupling.

8. Portable electric power tool according to Claim 2, **characterized in that** the coupling comprises a plate-like locking element (15) having a second pivot guide (23, 24), which is at least regionally not congruent with the pivot guide of the base element (14).

9. Portable electric power tool according to one of the preceding claims, **characterized in that** the handle holder (10) has connecting devices (21, 21') for releasably connecting wheels (22, 22').

10. Portable electric power tool according to one of the preceding claims, **characterized in that** the handle holder (10) has, at its end, two axially projecting pegs (17, 19) that engage in the coupling.

## Revendications

1. Machine-outil électrique commandée à la main, en particulier cisaille à gazon, comprenant au moins un support de manche (10) et un porte-outil (11), dans laquelle un manche de conduite (12) peut être assemblé avec le support de manche (10), dans laquelle un couplage est disposé entre le porte-outil (11) et le support de manche (10), dans laquelle le couplage présente un guidage pivotant, qui permet une rotation relative entre le porte-outil (11) et le support de manche (10), **caractérisée en ce qu'**un des deux supports (10, 11) présente côté frontal deux goujons (17, 19) axialement saillants et s'engageant dans le couplage, dans laquelle un des goujons (17, 19) peut être guidé dans une rainure de guidage (16) réalisée sous la forme dudit guidage pivotant et l'autre support (10, 11) assemblé au couplage peut pivoter autour de l'autre goujon (17, 19) comme axe de rotation.

2. Machine-outil électrique commandée à la main selon la revendication 1, **caractérisée en ce que** le couplage est formé au moins par un élément de base en forme de plaque (14).

3. Machine-outil électrique commandée à la main selon une revendication 1 ou 2, **caractérisée en ce que** ladite au moins une rainure de guidage (16), qui est en engagement avec un goujon correspondant (17) du support (10, 11), est réalisée sous forme de guidage pivotant.

4. Machine-outil électrique commandée à la main selon l'une quelconque des revendications précédentes, **caractérisée en ce que** les goujons (17, 19) restent chacun en place lors de mouvements de pivotement effectués par le couplage par rapport au support sur lequel ils sont en saillie.

5. Machine-outil électrique commandée à la main selon l'une quelconque des revendications précédentes, **caractérisée en ce que** deux rainures de guidage allongées et se croisant en forme de X (16, 18) sont réalisées.

6. Machine-outil électrique commandée à la main selon l'une quelconque des revendications précédentes, **caractérisée en ce que** l'axe de rotation du mouvement de pivotement est disposé de façon excentrique par rapport à l'axe central (20) de l'appareil.

7. Machine-outil électrique commandée à la main selon l'une quelconque des revendications précédentes, **caractérisée en ce que** le porte-outil (11) et le support de manche (10) peuvent pivoter latéralement par l'intermédiaire du couplage d'un angle d'au moins 45° l'un par rapport à l'autre autour de l'axe central (20) de l'appareil.

8. Machine-outil électrique commandée à la main selon la revendication 2, **caractérisée en ce que** le couplage comprend un élément d'arrêt en forme de plaque (15) avec un second guidage pivotant (23, 24), qui est au moins localement en position de recouvrement avec le guidage pivotant de l'élément de base (14).

9. Machine-outil électrique commandée à la main selon l'une quelconque des revendications précédentes, **caractérisée en ce que** le support de manche (10) présente des dispositifs d'assemblage (21, 21') pour le montage séparable de roues (22, 22').

10. Machine-outil électrique commandée à la main selon l'une quelconque des revendications précédentes, **caractérisée en ce que** le support de manche (10) présente côté frontal deux goujons (17, 19) axialement saillants s'engageant dans le couplage.
